# EUROPEAN PATENT APPLICATION

(11) **EP 1 944 778 A2**
(43) Date of publication of application: **16.07.2008**
(21) Application number: 08000129.0
(22) Date of filing: 04.01.2008
(51) Int. Cl.: H01F 38/14, H01F 27/34, B60L 5/00

(54) **Non-contact electricity feeding system and running vehicle using this, and method for reducing leakage magnetic field**

(30) Priority: 12.01.2007 JP 2007004464
(71) Applicant: Murata Machinery, Ltd., Minami-ku Kyoto-shi Kyoto 601-8326 (JP)
(72) Inventor: Koumoto, Homare Murata Machinery, LTD, Inuyama-shi Aichi 484-8502 (JP)
(74) Representative: Emde, Eric

(57) **Abstract**

A feeding line is connected to an AC source so that electricity is picked up from the feeding line in a non-contact manner by a pickup coil provided on the side of a moving body. A compensating current from a compensating power source in phase or in reverse phase with respect to a current flowing in the feeding line is caused to flow in a compensating line arranged in the vicinity of the feeding line. A magnetic field from the compensating current reduces a leakage magnetic field from the feeding line.

## Description

### BACKGROUND OF THE INVENTION

### 1. Field of the Invention

This invention relates to reducing a leakage magnetic field from a non-contact electricity feeding system, and the non-contact electricity feeding system of this invention is used as a part of an overhead running vehicle system, a rail guided vehicle system or the like, for example.

In a running vehicle system such as an overhead running vehicle system, a non-contact electricity feeding is used. In this system, a feeding line is placed in a running rail of the overhead running vehicle, and the overhead running vehicle runs by picking up electricity in a non-contact manner by a pickup coil provided in a magnetic core (JP2002-238102A). A load port is provided under the running rail so that a semiconductor cassette and the like are received from, and passed to the overhead running vehicle. The load port is attached to a processing device, and a transported semiconductor wafer and the like are subjected to processing such as inspection, exposure, impurity injection, and etching in the processing device.

The inventor has found that with miniaturization of semiconductor process, a magnetic field from a non-contact electricity feeding line affects the semiconductor processing device. For example, when a semiconductor wafer with a conductor spacing of 45 nm is inspected by laser, the magnetic field from the feeding line affects positioning of an inspection device, thereby affecting the inspection. As the miniaturization further advances, the effect of the magnetic field becomes more remarkable. The magnetic field affects not only the inspection of the semiconductor by laser but also electronics in the processing device. This gives rise to reducing the leakage magnetic field from the non-contact electricity feeding system.

### SUMMARY OF THE INVENTION

A problem of this invention is to reduce a leakage magnetic field form a non-contact electricity feeding system.
An additional problem of this invention is to easily construct a compensating power source for canceling out the leakage magnetic field.
Another additional problem of this invention is to efficiently cancel out the leakage magnetic field in a wide range.
Still another additional problem of this invention is to prevent peripheral devices from being affected by the leakage magnetic field from a feeding line of a running vehicle system.

According to this invention, in a non-contact electricity feeding system having an AC source, a feeding line connected to the AC source, and a pickup coil that picks up electricity from the feeding line in a non-contact manner, and is provided on the side of a moving body, the system includes a compensating power source in phase or in reverse phase with respect to a current flowing in the feeding line, and a compensating line for reducing a magnetic field from the feeding line by a compensating current from the compensating power source, which is arranged in the vicinity of the feeding line.
Moreover, in a method for reducing a leakage magnetic field from a non-contact electricity feeding system of this invention, the non-contact electricity feeding system has an AC source, a feeding line connected to the AC source, and a pickup coil that picks up electricity from the feeding line in a non-contact manner, and is provided on the side of a moving body, and the method includes the step of causing a compensating current from a compensating power source in phase or in reverse phase with respect to a current flowing in the feeding line to flow through a compensating line arranged in the vicinity of the feeding line to thereby reduce a leakage magnetic field from the feeding line by a magnetic field from the compensating current.

Furthermore, according to this invention, a non-contact electricity feeding system is used for feeding electricity in a running vehicle system, the non-contact electricity feeding system having an AC source, a feeding line connected to the AC source, a pickup coil that picks up electricity from the feeding line in a non-contact manner, and is provided on the side of a moving body, a compensating power source in phase or in reverse phase with respect to a current flowing in the feeding line, and a compensating line for reducing a magnetic field from the feeding line by a compensating current from the compensating power source, which is arranged in the vicinity of the feeding line. Additionally, an electricity feeding rail for feeding electricity from the feeding line to a running vehicle is provided, and the compensating line is provided in the electricity feeding rail.

Preferably, the compensating power source is a second pickup coil that is different from the pickup coil provided on the side of the moving body, and picks up electricity from the feeding line.
Particularly preferably, the compensating line is a lengthy loop coil antenna having a plurality of turns, the lengthy direction of which is parallel to the feeling line.

In this invention, by causing the compensating current in phase or in reverse phase with respect to the current flowing in the feeding line to flow through the compensating line, the magnetic field is generated in a direction canceling out the magnetic field from the feeding line. This can reduce the leakage magnetic field from the non-contact electricity feeding system.
Moreover, in this invention, by providing the compensating line in the electricity feeding rail of the running vehicle system, the effect of the leakage magnetic field on peripheral devices of the running vehicle system and the like can be reduced.

In this case, when the compensating power source is the second pickup coil that picks up the electricity from the feeding line, the compensating power source can be constructed easily.
When the compensating line is a lengthy loop coil antenna having a plurality of turns, the lengthy direction of which is parallel to the feeling line, the plurality of turns can reduce the leakage magnetic field with a smaller compensating current, and the lengthy direction of the coil antenna parallel to the feeding line can reduce the leakage magnetic field in a wide range along the feeding line.

### BRIEF DESCRIPTION OF THE DRAWINGS

Fig. 1 is a view schematically showing an overhead running vehicle system of an embodiment;
Fig. 2 is a substantially part plan view showing a layout of the overhead running vehicle system of the embodiment;
Fig. 3 is a view schematically showing an external antenna in the overhead running vehicle system of the embodiment;
Fig. 4 is a diagram schematically showing currents in the embodiment; and
Fig. 5 is an equivalent circuit diagram of the embodiment.

### EXPLANATION OF SYMBOLS

- 2: Running rail
- 4, 4': Electricity feeding rail
- 5: Feeding line
- 6: Strut
- 8: External antenna
- 10, 10': Processing device
- 12: Load port
- 14, 22: Magnetic core
- 16: Pickup coil
- 18: Capacitor
- 20: Coil
- 24: Power source

### DESCRIPTION OF THE PREFERRED EMBODIMENT

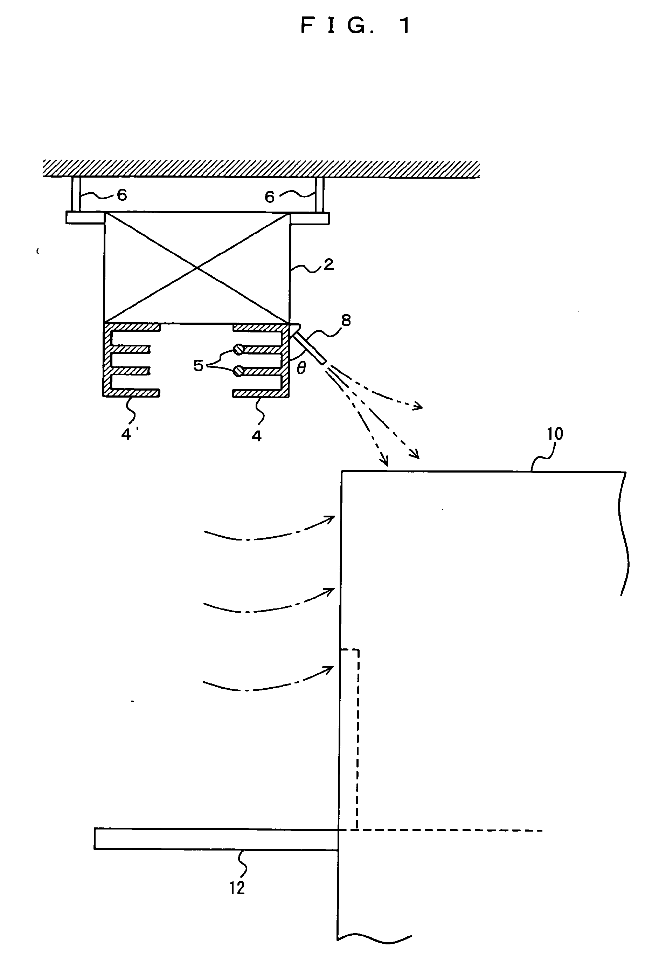

In Figs. 1 to 5, an embodiment is illustrated. In the respective figures, reference numeral 2 denotes a running rail, under which a pair of right and left electricity feeding rails 4 and 4' is provided. The electricity feeding rail 4 is provided with a pair of feeding lines 5 and 5, for example. The electricity feeding rail 4' is used in a curve section or the like, and each of the electricity feeding rails 4 and 4' may be physically a part of the running rail 2. An alternating current of, for example, about 10 KHz is caused to flow through the feeding line 5 from an AC source not shown, and a magnetic field generated by this is picked up by a pickup coil of an overhead running vehicle not shown to perform non-contact electricity feeding. A pickup core is constructed, for example, by winding a coil around a magnetic core.

Reference numeral 6 denotes a strut. The running rail 2 and the electricity feeding rails 4 and 4' are provided in a clean room, so that the overhead running vehicle, for example, transports a semiconductor cassette, a reticle and the like, or transports an appropriate article in a hospital, library or the like. In the embodiment, while an overhead running vehicle system is taken as an example, the invention can be similarly applied to a rail guided vehicle system running on the ground and a running vehicle system of a stacker crane of an automated warehouse.

Reference numeral 8 denotes an external antenna, which is attached to the electricity feeding rail 4 or the running rail 2, and has a lengthy shape. A lengthy direction of the external antenna 8 is parallel to a longitudinal direction of the running rail 2, and an orientation of a central axis of a coil is inclined at an angle of θ with respect to a vertical direction, where θ is set to 0° to 180°, for example, and preferably 0° to 60°. A compensating current in phase or in reverse phase with respect to a current flowing in the feeding line 5 is caused to flow in the coil of the external antenna 8, and a magnetic field generated by the coil 20 reduces magnetic fields generated by the pair of feeding lines 5 and 5.

Reference numeral 10 denotes a processing device such as a semiconductor. In this case, the processing device includes an inspection device. Reference numeral 12 denotes a load port of the processing device 10. The overhead running vehicle not shown receives and passes a semiconductor cassette and the like between the load port 12 and itself, and the cassette dropped off onto the load port 12 is drawn into the processing device 10 to take out a wafer. The taken-out wafer is subjected to processing such as inspection and exposure by laser beam, etching, impurity injection, and milling. These types of processing to the semiconductor may be affected by the electromagnetic field from the feeding line 5, and particularly, the positioning of the inspection device for inspecting a state of conductor spacing using laser beam may go out of order because of the effect of the magnetic field. The leakage magnetic field from the feeding line 5 needs to be reduced. In the embodiment, since the processing device 10 is provided on one of the right and left sides of the running rail 2, the external antenna 8 is also provided on one of the right and left sides of the running rail 2. In the case where the effect of the leakage magnetic field on both the right and left sides of the running rail 2 is reduced, the external antennas 8 are provided on both the right and left sides of the running rail 2.

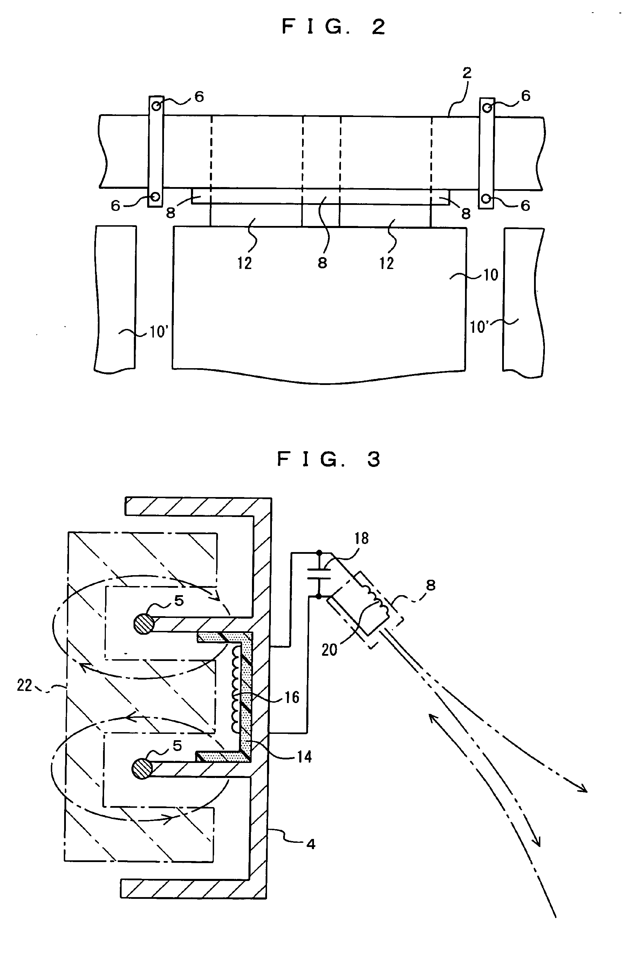

In Fig. 2, the external antenna 8 is shown in plan view, in which the external antenna 8 has about the same length as a length of the processing device 10, for example, and is arranged in parallel to the longitudinal direction of the running rail 2. This reduces the effect of the leakage magnetic field on the processing device 10 from the electricity feeding rail, and in order to reduce a leakage magnetic field in a specific position within the processing device 10, the external antenna 8 may be projected in a rod-like shape toward the processing device 10 from the electricity feeding rail or the like. Alternatively, the external antenna 8 may be provided across an almost entire length of the electricity feeding rail. Reference numeral 10' of Fig. 2 denotes a processing device in which the effect of the leakage magnetic field is not serious, and the processing device 10' is not provided with the external antenna 8.

The attachment of the external antenna 8 to the electricity feeding rail 4 is shown in Fig. 3. Reference numeral 14 denotes a magnetic core, and reference numeral 16 denotes a pickup coil, which feeds electricity to a resonance circuit of a capacitor 18 and the coil 20 of the external antenna 8. If there is a position where the feeding line 5 is removed from the electricity feeding rail, the pickup coil 16 may be provided in the vicinity of the feeding line 5 outside of the electricity feeling rail. The coil 20 is formed in a plurality of turns, and an opening direction of the coil 20, that is, a direction of the central axis of the coil 20 is upward at the angle of θ from the vertical direction so as to generate a magnetic field in a direction of alternate long and two short dashes line shown in Figs. 1 and 3. In contrast, an alternating current flowing in the feeding line 5 generates a magnetic field in a direction of alternate long and short dash line around the above-described magnetic field, and the angle θ is fixed so that the directions of the magnetic field from the coil 20 and the magnetic fields from the feeding lines 5, 5 become reverse in the vicinity of the processing device 10 to reduce the external magnetic field.

Since the magnetic field from the coil 20 and the magnetic field of the feeding line 5 are not cancelled out in all positions, the position, the angle θ of the external antenna 8 and the like are selected so as to cancel out the magnetic fields inside of the target processing device 10. Moreover, the capacity of the capacitor 18, the number of turns of the coil 20 and the like are determined so as to minimize the external magnetic field inside of the target processing device 10.

While the electricity is picked up from the feeding line 5 by the pickup coil 16 in this case, an in-phase or reverse-phase power source having a frequency equal to that of a power source of the feeding line 5 may be prepared separately to feed the electricity to the coil 20. Reference numeral 22 of Fig. 3 is a magnetic core of the overhead running vehicle. A coil not shown is provided to pick up the electricity by the magnetic field from the feeding line 5.

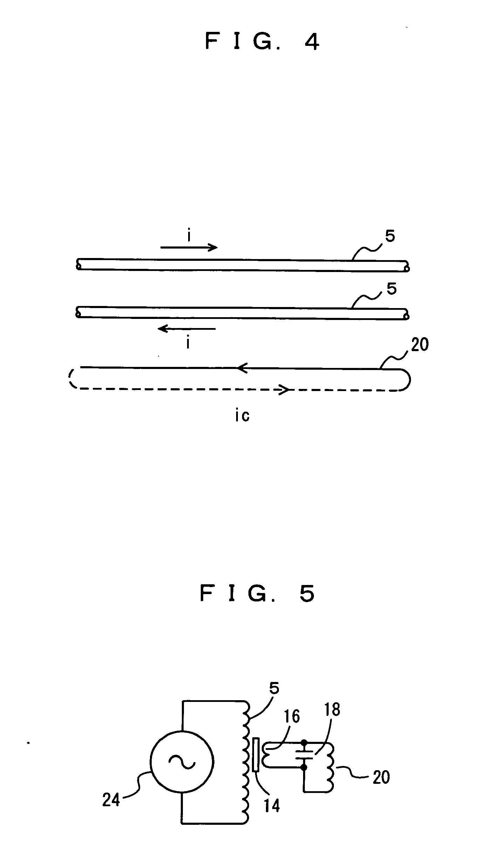

Fig. 4 shows a relation between a current i flowing in the feeding line 5 and a compensating current ic flowing in the coil 20. Since an alternating current of the frequency of about 10 KHz has a wavelength of about 30 km, when electricity is picked up by the pickup coil 16, the compensating current ic is in phase or in reverse phase with respect to the current i flowing in the feeding line 5. Consequently, whether the coil 20 is wound clockwise or counterclockwise determines the direction of the magnetic field from the external antenna 8 to the magnetic field from the feeding line 5. The current i flowing in the feeding lines 5 and 5 arranged at a predetermined interval is considered to generate a magnetic field equivalent to one turn of coil. This magnetic filed is reduced by the magnetic field from the lengthy coil 20. For example, if the lengthy coil 20 is a coil having 20 turns, the compensating current ic of about 1/20 of the current flowing in the feeding line 5 can reduce the external magnetic field sufficiently.

An equivalent circuit of the coil 20 is shown in Fig. 5. A power source 24 feeds electricity to the feeding line 5, and the electricity is picked up by the pickup coil 16 magnetically coupled through the magnetic core 14 to be fed to the resonance circuit of the capacitor 18 and the coil 20.

In the embodiment, the following effects are obtained.
(1) The leakage magnetic field from the feeding line 5 can be reduced.
(2) Since the compensating current ic is caused to flow with the feeding line 5 itself used as a power source, the installation is easy.
(3) The leakage magnetic field can be made smaller in the vicinity of the target processing device 10.
(4) The current flowing in the coil 20 may be smaller than the current flowing in the feeding line 5, which may make power consumption minimal.
(5) The extent of the reduction in leakage magnetic field can be adjusted by the capacitor 18 and the number of turns of the coil 20. Moreover, the position where the leakage magnetic field is reduced can be adjusted by the orientation of the external antenna 8 from the vertical downward direction, the length thereof along the running rail 2 and the like.

While in the embodiment, the application to the overhead running vehicle system is described, the invention can be applied to another running vehicle system. The external antenna 8 may be preferably provided in the vicinity of the electricity feeding rails 4 and 4', or the running rail 2, that is, it is preferably provided on the side of the feeding line 5 rather than on the side of the processing device 10.

## Claims

1. A non-contact electricity feeding system having an AC source, a feeding line connected to the AC source, and a pickup coil that picks up electricity from the feeding line in a non-contact manner, and is provided on the side of a moving body, the system comprising:
a compensating power source in phase or in reverse phase with respect to a current flowing in the feeding line; and
a compensating line for reducing a leakage magnetic field from the feeding line by a compensating current from the compensating power source; said compensating line being arranged in the vicinity of the feeding line.

2. The non-contact electricity feeding system according to claim 1, the compensating power source being a second pickup coil that is different from the pickup coil provided on the side of the moving body, and picking up electricity from the feeding line.

3. The non-contact electricity feeding system according to claim 2, the compensating line being a lengthy loop coil antenna having a plurality of turns, the lengthy direction of which being parallel to the feeding line.

4. A running vehicle system having the non-contact electricity feeding system according to claim 1, wherein said moving body is a running vehicle; said running vehicle system further comprising:
an electricity feeding rail being provided with the feeding line for feeding electricity from the feeding line to a running vehicle;
wherein the compensating line is provided in the electricity feeding rail.

5. A method for reducing a leakage magnetic field from a non-contact electricity feeding system,
the non-contact electricity feeding system having an AC source, a feeding line connected to the AC source, and a pickup coil picking up electricity from the feeding line in a non-contact manner, provided on the side of a moving body,
the method comprising the step of:
causing a compensating current from a compensating power source in phase or in reverse phase with respect to a current flowing in the feeding line to flow through a compensating line arranged in the vicinity of the feeding line to thereby reduce a leakage magnetic field from the feeding line by a magnetic field from the compensating current.
